# EUROPÄISCHE PATENTSCHRIFT

(11) **EP 1 987 232 B1**
(45) Veröffentlichungstag und Bekanntmachung des Hinweises auf die Patenterteilung: **15.05.2013**
(21) Anmeldenummer: 07711614.3
(22) Anmeldetag: 21.02.2007
(51) Int. Cl.: F01C 9/00, F01C 21/10, F01C 21/18

(54) **SCHWENKKOLBENMASCHINE**
OSCILLATING PISTON ENGINE
MOTEUR À PISTONS OSCILLANTS

(30) Priorität: 22.02.2006 DE 102006009198
(43) Veröffentlichungstag der Anmeldung: 05.11.2008
(73) Patentinhaber: Hüttlin, Herbert, 79539 Lörrach (DE)
(72) Erfinder: Hüttlin, Herbert, 79539 Lörrach (DE)
(74) Vertreter: Heuckeroth, Volker
(86) Internationale Anmeldenummer: PCT/EP2007/001488
(87) Internationale Veröffentlichungsnummer: WO 2007/096140

(56) Entgegenhaltungen:
- WO-A-2005/098202
- WO-A-2006/089576
- WO-A-2006/128545
- JP-A- 52 037 677
- US-A- 3 075 506
- US-A1- 2002 170 511

## Beschreibung

Die Erfindung betrifft eine Schwenkkolbenmaschine, mit einem Gehäuse, in dem ein erster und zumindest ein zweiter Kolben angeordnet sind, die gemeinsam in dem Gehäuse um eine gehäusefeste Drehachse umlaufen können, und die beim Umlaufen um die Drehachse um eine senkrecht zur Drehachse durch die Gehäusemitte verlaufende Schwenkachse zueinander gegensinnige hin- und hergehende Schwenkbewegungen ausführen, wobei zwischen einander zugewandten Endflächen des ersten und zumindest zweiten Kolbens eine Arbeitskammer angeordnet ist, und mit zumindest einer Gaswechselöffnung im Gehäuse zum Ein- oder Auslassen eines Gases in die oder aus der Arbeitskammer.

Eine solche Schwenkkolbenmaschine ist aus dem Dokument WO 03/067033 A1 bekannt.

Schwenkkolbenmaschinen und insbesondere eine Schwenkkolbenmaschine gemäß der vorliegenden Erfindung können als Brennkraftmaschinen (Verbrennungsmotoren), als Pumpen oder als Kompressoren verwendet werden. Eine Schwenkkolbenmaschine gemäß der vorliegenden Erfindung wird vorzugsweise als Brennkraftmaschine verwendet und als solche in der vorliegenden Beschreibung beschrieben.

Im Falle der Verwendung einer Schwenkkolbenmaschine als Brennkraftmaschine werden die einzelnen Arbeitstakte des Einlassens, Verdichtens, Expandierens und Ausstoßens durch hin- und hergehende Schwenkbewegungen der einzelnen Kolben zwischen zwei Endstellungen vermittelt.

Bei der aus dem oben genannten Dokument WO 03/067033 A1 desselben Anmelders bekannten Schwenkkolbenmaschine sind in dem kugelförmigen Gehäuse vier Kolben angeordnet, die um eine gehäusemittige gehäusefeste Drehachse gemeinsam umlaufen und beim Umlaufen in dem Gehäuse hin- und hergehende Schwenkbewegungen um eine Schwenkachse ausführen, wobei jeweils zwei benachbarte Kolben gegensinnig verschwenken. Bei dieser bekannten Schwenkkolbenmaschine sind jeweils zwei diametral bezüglich der Gehäusemitte gegenüberliegende Kolben zu einem Doppelkolben miteinander starr verbunden, und zwei derartige Kolbenpaare sind in der Gehäusemitte über Kreuz angeordnet. Zwischen jeweils zwei einander zugewandten Endflächen der Kolben der Kolbenpaare wird jeweils eine Arbeitskammer gebildet, so dass die bekannte Schwenkkolbenmaschine insgesamt zwei Arbeitskammern aufweist. Beide Arbeitskammern, die bezüglich der Gehäusemitte diametral gegenüberliegend angeordnet sind, vergrößern und verkleinern sich bei der hin- und hergehenden Schwenkbewegung der Kolben gleichsinnig.

Die Kolben dieser bekannten Schwenkkolbenmaschine sind in dem Gehäuse so angeordnet, dass sie in ihrer OT-Stellung, in der die Volumina der beiden Arbeitskammern minimal sind, senkrecht zur Drehachse stehen. In dieser Stellung sind beim Umlaufen der Kolben um die Drehachse die auf die Kolben wirkenden Zentrifugalkräfte maximal. Dies führt dazu, dass bei hohen Drehzahlen das Expandieren bzw. das Auseinanderschwenken der Kolben gegen die Fliehkräfte erfolgen muss, weil die Fliehkräfte der auseinanderschwenkenden Bewegung der Kolben entgegenwirken. Die Arbeitskammern liegen bei dieser Schwenkkolbenmaschine stets außerhalb und senkrecht zur Drehachse.

Die bekannte Schwenkkolbenmaschine weist weiterhin im Gehäuse zwei Gaswechselöffnungen auf, die in Bezug auf die Drehachse in einem Winkelabstand von etwa 100° zueinander angeordnet sind. Die eine Gaswechselöffnung dient zum Einlassen von Verbrennungsluft und die andere Gaswechselöffnung dient zum Ausstoßen des verbrannten Brennstoff-Luft-Gemisches. Eine Zündkerze ist auf der den Gaswechselöffnungen gegenüberliegenden Seite der Drehachse etwa auf der Winkelhalbierenden zwischen den beiden Gaswechselöffnungen angeordnet.

Aus dem Dokument WO 2005/098202 A1 das, als nächstliegender Stand der Technik anzusehen wird und die Merkmale des Oberbegriffs des Anspruchs 1 zeigt ist eine mit der zuvor beschriebenen bekannten Schwenkkolbenmaschine vergleichbare Schwenkkolbenmaschine bekannt. Wie bei der zuvor beschriebenen bekannten Schwenkkolbenmaschine sind den den Arbeitskammern abgewandten Rückseiten der Kolben Vordruckkammern zugeordnet. Zum Befluten der Vordruckkammern mit atmosphärischem Frischgas sind Ansaugöffnungen in dem Gehäuse vorgesehen, und zum Befluten der Arbeitskammern mit vorkomprimiertem Frischgas sind die Vordruckkammern über eine Anschlussöffnung und über einen Überströmkanal mit den Arbeitskammern verbunden. Die auf der Drehachse liegende Abtriebswelle ist stirnseitig mit Drehschiebern versehen, die je zwei einander gegenüberliegende, mit den Ansaugöffnungen sowie mit der Anschlussöffnung zusammenführbare Fenster aufweisen, wobei bei einer Drehung der Welle um 180° abwechselnd jeweils alle vier Fenster die Ansaugöffnungen und jeweils zwei der Fenster die Anschlussöffnungen der Überströmkanäle freigeben. Die eigentlichen Gaswechselöffnungen, die den Arbeitskammern zugeordnet sind, sind mit gesteuerten Ventilen versehen, was den konstruktiven Aufwand erhöht. Dieses bekannte Konzept des Vorsehens einer um die Drehachse rotierenden Steuerscheibe bzw. eines Drehschiebers ist bei einer vergleichbaren Schwenkkolbenmaschine auch aus dem Dokument US 6,325,038 B1 bekannt.

Der Erfindung liegt die Aufgabe zugrunde, eine Schwenkkolbenmaschine anzugeben, die sich von dem Konzept der Anordnung der Kolben der bekannten Schwenkkolbenmaschine löst, und die dabei außerdem eine konstruktiv einfache Steuerung des Gaswechsels bzw. Gasaustausches der Arbeitskammer ermöglicht.

Erfindungsgemäß wird diese Aufgabe hinsichtlich der eingangs genannten Schwenkkolbenmaschine dadurch gelöst, dass die Drehachse durch die Arbeitskammer verläuft, dass der erste Kolben und der zumindest zweite Kolben in einem Kolbenkäfig gleitend gelagert sind, der im Gehäuse konzentrisch zur Drehachse um diese drehbar angeordnet ist und mit den Kolben gemeinsam um die Drehachse umläuft, dass die zumindest eine Gaswechselöffnung, bezogen auf die Drehachse, an einer Stirnseite des Gehäuses exzentrisch angeordnet ist, und dass der Stirnseite des Gehäuses eine vollflächige Stirnseite des Kolbenkäfigs gegenüberliegt, die eine in Umlaufrichtung um die Drehachse begrenzte exzentrische Öffnung aufweist, wobei die Strömung des Arbeitsgases durch die zumindest eine Gaswechselöffnung im Wesentlichen axial zur Drehachse gerichtet ist.

Bei der erfindungsgemäßen Schwenkkolbenmaschine sind demnach die zumindest zwei Kolben so angeordnet, dass die Arbeitskammer nicht senkrecht zur Drehachse, sondern auf der Drehachse bzw. um die Drehachse herum liegt. Die auf die die Arbeitskammer begrenzenden beiden Kolben beim Umlaufen um die Drehachse wirkenden Fliehkräfte sind wegen der geringeren Beabstandung der Kolben von der Drehachse geringer und wirken außerdem in Richtung des Auseinanderschwenkens der beiden Kolben, d.h. die Fliehkräfte unterstützen den Arbeitstakt des Expandierens. Des Weiteren ist die zumindest eine Gaswechselöffnung nun nicht mehr wie bei der bekannten Schwenkkolbenmaschine in einem Gehäusebereich angeordnet, der einen großen Abstand von der Drehachse aufweist, sondern an der Stirnseite des Gehäuses in unmittelbarer Zuordnung zu der auf der Drehachse liegenden Arbeitskammer. Die Strömung des Arbeitsgases durch die zumindest eine Gaswechselöffnung ist somit im Wesentlichen axial zur Drehachse gerichtet. Zur Erzielung einer einfachen, insbesondere ventillosen Steuerung des Gaswechsels in die oder aus der Arbeitskammer weist der Kolbenkäfig, in dem die Kolben gleitend gelagert sind, eine vollflächige Stirnseite auf, die beim Rotieren des Kolbenkäfigs an der Innenseite der Stirnseite des Gehäuses entlang läuft. In der Stirnseite des Kolbenkäfigs ist eine in Umlaufrichtung gesehen begrenzte exzentrische Öffnung vorhanden, die beim Umlaufen des Kolbenkäfigs um die Drehachse je nach Umlaufstellung mit der Gaswechselöffnung in der Stirnseite des Gehäuses kommuniziert oder nicht kommuniziert. Auf diese Weise ist es vorteilhafterweise nicht erforderlich, die zumindest eine Gaswechselöffnung mit einem aktiv gesteuerten Ventil zu versehen, weil die Ventilfunktion von der Öffnung in der Stirnseite des Kolbenkäfigs übernommen wird.

Wenn die exzentrische Öffnung in der Stirnseite des Kolbenkäfigs nicht mit der Gaswechselöffnung in Deckung liegt, ist die Arbeitskammer gegen die Gaswechselöffnung, beispielsweise beim Verdichten oder Expandieren des Brennstoff-Luft-Gemisches, abgedichtet.

In einer bevorzugten Ausgestaltung erweitert sich die Gaswechselöffnung von einer Außenseite zu einer Innenseite der Stirnseite des Gehäuses hin im Öffnungsquerschnitt.

Der Vorteil dieser Maßnahme besteht darin, dass aufgrund des auf der Innenseite der Stirnseite des Gehäuses größeren Öffnungsquerschnitts der Gaswechselöffnung die Öffnung in der Stirnseite des Kolbenkäfigs klein gehalten werden kann, und dennoch beim Vorbeilaufen der Öffnung des Kolbenkäfigs an der Gaswechselöffnung im Gehäuse ein ausreichender Gaswechsel erfolgen kann.

In einer weiteren bevorzugten Ausgestaltung erstreckt sich eine maximale lichte Weite der Gaswechselöffnung in Umlaufrichtung um die Drehachse gesehen über einen Umlaufwinkel von mehr als 30° und weniger als 90°.

Der Vorteil dieser Maßnahme besteht darin, dass ein vollständiger Gaswechsel durch die zumindest eine Gaswechselöffnung in einem Umlaufwinkelbereich von weniger als 90° bewerkstelligt wird.

In einer weiteren bevorzugten Ausgestaltung ist an der Stirnseite des Gehäuses eine zweite Gaswechselöffnung exzentrisch angeordnet, wobei die zumindest eine Gaswechselöffnung zum Auslassen eines Gases aus der Arbeitskammer und die zweite Gaswechselöffnung zum Einlassen eines Gases in die Arbeitskammer dient, und wobei die Öffnung in der Stirnseite des Kolbenkäfigs beim Umlaufen um die Drehachse nacheinander, jedoch ohne zeitlichen Überlapp, mit der zumindest einen und der zweiten Gaswechselöffnung kommuniziert.

Bei dieser Ausgestaltung sind demnach zwei Gaswechselöffnungen in der Stirnseite des Gehäuses vorgesehen, von denen die eine zum Einlassen eines Gases, beispielsweise Verbrennungsluft oder Brennstoff-Luft-Gemisch, und die andere zum Auslassen eines Gases, beispielsweise verbrannten Brennstoff-Luft-Gemisches, dient. In Umlaufrichtung der Kolben gesehen läuft die Öffnung in der Stirnseite des Kolbenkäfigs zuerst an der Gaswechselöffnung zum Auslassen des Gases aus der Arbeitskammer und anschließend an der Gaswechselöffnung zum Einlassen eines Gases in die Arbeitskammer vorbei. Die Anordnung der Gaswechselöffnungen ist dabei in Bezug auf die Abmessung der Öffnung in der Stirnseite des Kolbenkäfigs so getroffen, dass die Öffnung des Kolbenkäfigs stets nur mit einer der beiden Gaswechselöffnungen kommunizieren kann, während die andere durch die übrige vollflächige Stirnseite des Kolbenkäfigs geschlossen ist. Insgesamt hat diese Ausgestaltung den Vorteil, dass das Einlassen eines Gases in die Arbeitskammer und das Auslassen eines Gases aus der Arbeitskammer auf konstruktiv einfache Weise ohne das Erfordernis zusätzlicher Steuerventile gesteuert werden kann.

Im Zusammenhang mit der zuvor genannten Ausgestaltung ist es weiterhin bevorzugt, wenn die zumindest eine Gaswechselöffnung zum Auslassen von Gas in Umlaufrichtung des Kolbenkäfigs gesehen vor der zweiten Gaswechselöffnung zum Einlassen von Gas angeordnet ist.

Diese Maßnahme hat den Vorteil, dass die Anordnung der Gaswechselöffnungen dem natürlichen Atmungsprinzip der durch die beiden Kolben definierten Arbeitskammer entspricht. Der Vorgang des Auslassens bzw. Ausstoßens von verbranntem Brennstoff-Luft-Gemisch erfolgt bei einer aufeinander zu gerichteten Schwenkbewegung der beiden Kolben, bis die Arbeitskammer zwischen den beiden Kolben minimiert ist. Nach dem Ausstoßen von verbranntem Brennstoff-Luft-Gemisch kann sich nun bei der erneuten auseinandergerichteten Schwenkbewegung der beiden Kolben, bei der die Arbeitskammer sich wieder vergrößert, unmittelbar nach dem vollständigen Ausstoßen des verbrannten Brennstoff-Luft-Gemisches neue Verbrennungsluft, ggf. zusammen mit Brennstoff, in die Arbeitskammer eingelassen bzw. angesaugt werden. Dieser zusammengesetzte Vorgang des Ausstoßens des verbrannten Brennstoff-Luft-Gemisches und des Einlassens von.frischer Verbrennungsluft oder Brennstoff-Luft-Gemisches kann sich vorteilhafterweise in einem Winkelbereich von weniger als 180° der Umlaufbewegung der Kolben bzw. des Kolbenkäfigs um die Drehachse vollziehen.

Weiterhin ist es bevorzugt, wenn die zumindest eine Gaswechselöffnung und die zweite Gaswechselöffnung in Umlaufrichtung des Kolbenkäfigs gesehen durch einen Steg voneinander getrennt sind, der zumindest geringfügig breiter ist als die Breite der Öffnung des Kolbenkäfigs, wobei sich der Steg in Umlaufrichtung gesehen über einen Winkel von etwa 20° bis etwa 60°, vorzugsweise über einen Winkel von etwa 40° bis etwa 50°, erstreckt.

Bei dieser Ausgestaltung sind demnach die beiden Gaswechselöffnungen in Umlaufrichtung um die Drehachse gesehen nahe beieinander angeordnet und lediglich durch den Steg voneinander getrennt. Die Breite des Steges muss lediglich breiter als die Öffnung des Kolbenkäfigs sein, um eine gasdichte Trennung der beiden Gaswechselöffnungen beim Umlaufen des Kolbenkäfigs um die Drehachse zu gewährleisten. Insgesamt ergibt sich ein konstruktiv sehr einfacher Steuermechanismus für den Gaswechsel in die und aus der Arbeitskammer, der lediglich zwei bezüglich der Drehachse exzentrische Öffnungen in der Stirnseite des Gehäuses und eine exzentrische Öffnung in der Stirnseite des Kolbenkäfigs erfordert.

In einer weiteren bevorzugten Ausgestaltung ist zwischen der Stirnseite des Gehäuses und der Stirnseite des Kolbenkäfigs eine Dichtungsanordnung vorhanden, die zumindest eine Dichtung aufweist, die die zumindest eine Gaswechselöffnung gegen die Stirnseite des Kolbenkäfigs abdichtet.

Diese Maßnahme hat den Vorteil, dass die zumindest eine Dichtung in den Umlaufstellungen des Kolbenkäfigs um die Drehachse, in denen die Öffnung des Kolbenkäfigs nicht mit der zumindest einen Gaswechselöffnung kommuniziert, gewährleistet, dass kein Gaswechsel in die oder aus der Arbeitskammer stattfindet, wodurch hohe Arbeitsdrücke in der Arbeitskammer beim Verdichten des Brennstoff-Luft-Gemisches und beim Expandieren des Brennstoff-Luft-Gemisches nach dem Zünden desselben erreicht werden können. Im einfachsten Fall ist die zumindest eine Dichtung am Umfang der zumindest einen Gaswechselöffnung angeordnet und schmiegt sich gegen die Stirnseite des Kolbenkäfigs an.

Bevorzugt ist es, wenn die Dichtungsanordnung am Kolbenkäfig vorgesehen ist und eine bezogen auf die Drehachse radial äußere Ringdichtung, ggf. eine radial innere Ringdichtung und zumindest zwei in Umfangsrichtung voneinander beabstandete sich zumindest näherungsweise radial erstreckende Dichtungen aufweist, die mit den Ringdichtungen verbunden und beidseits der Öffnung des Kolbenkäfigs angeordnet sind.

Die radial äußere Ringdichtung und die ggf. vorgesehene radial innere Ringdichtung bewirken eine Abdichtung der zumindest einen Gaswechselöffnung gegen den übrigen Innenraum des Gehäuses, während die beiden sich etwa radial erstreckenden Dichtungen die Öffnung des Kolbenkäfigs gegen die Stirnseite des Gehäuses abdichten. Die beiden Ringdichtungen und die beiden Radialdichtungen gleiten beim Umlaufen des Kolbenkäfigs entlang der Innenseite der Stirnseite des Gehäuses.

In einer weiteren bevorzugten Ausgestaltung weist die Dichtungsanordnung mehr als zwei sich zumindest näherungsweise radial erstreckende Dichtungen auf, die vorzugsweise in Umlaufrichtung um die Drehachse gleichmäßig verteilt sind.

Der Vorteil dieser Maßnahme besteht darin, dass durch das Vorsehen mehrerer Radialdichtungen die Dichtwirkung weiter verbessert wird, und dass außerdem eine gleichmäßige Anlage der gesamten Dichtungsanordnung an der Innenseite der Stirnseite des Gehäuses erreicht wird.

Die gesamte Dichtungsanordnung mit den Ringdichtungen und den Radialdichtungen kann insbesondere einstückig ausgeführt sein und in einer entsprechend konfigurierten Nut in der Außenseite der Stirnseite des Kolbenkäfigs eingelassen sein. Um einen gleichmäßigen Anpressdruck der Dichtungsanordnung an die Stirnseite des Gehäuses zu erreichen, kann die Dichtungsanordnung in der Stirnseite des Kolbenkäfigs mit Federkraft beaufschlagt sein, die die Dichtungsanordnung gegen die Stirnseite des Gehäuses drückt.

In einer weiteren bevorzugten Ausgestaltung ist in der Stirnseite des Gehäuses eine weitere, zentrische Öffnung und in der Stirnseite des Kolbenkäfigs ebenfalls eine weitere, zentrische Öffnung vorhanden.

In der zentrischen Öffnung der Stirnseite des Gehäuses kann nun vorteilhafterweise eine Zündkerze oder Glühkerze eingesetzt werden, die dann durch die mit der zentrischen Öffnung der Stirnseite des Gehäuses kommunizierenden zentrischen Öffnung in der Stirnseite des Kolbenkäfigs in die Arbeitskammer hineinwirken kann.

Die zuvor erwähnte radial innere Ringdichtung ist dann vorzusehen, um die zumindest eine Gaswechselöffnung gegen die zentrische Öffnung in der Stirnseite des Kolbenkäfigs abzudichten.

In einer weiteren bevorzugten Ausgestaltung weisen die Endflächen der Kolben in einen Bereich, der der Stirnseite des Kolbenkäfigs zugewandt ist, eine muldenartige Vertiefung auf.

Die Vertiefung bewirkt, dass die Kolben auch in der OT-Stellung, in der die Kolben maximal aufeinander zu verschwenkt sind, ein endliches Arbeitskammervolumen gewährleisten, wodurch sich eine optimale Ausgestaltung einer anfänglichen Brennmulde ergibt. Zu Beginn des Arbeitstaktes nach dem Zünden des Brennstoff-Luft-Gemisches wirkt die sich in dieser Brennmulde vollziehende Explosion mit einem maximalen Hebel auf die Kolben, da die Vertiefungen in den zuvor genannten Ausgestaltungen von der Schwenkachse den größten Abstand haben und somit einen großen Hebelarm an dem Kolben bilden.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: eine perspektivische Gesamtdarstellung einer Schwenkkolbenmaschine;
- Fig. 2: die Schwenkkolbenmaschine in Fig. 1 im Längsschnitt, wobei die Kolben in einer ersten Schwenkendstellung (UT-Stellung) gezeigt sind;
- Fig. 3: die Schwenkkolbenmaschine in Fig. 1 im gleichen Schnitt wie in Fig. 2, wobei die Kolben nunmehr in einer zweiten Schwenkendstellung (OT-Stellung) gezeigt sind;
- Fig. 4: die Schwenkkolbenmaschine in Fig. 1 in einem weiteren Längsschnitt, wobei die Schnittebene in Fig. 4 gegenüber der Schnittebene in Fig. 2 und 3 um etwa 45° verkippt ist, und wobei die Kolben in einer Schwenkstellung gezeigt sind, die etwa mittig zwischen den Stellungen in Fig. 2 und in Fig. 3 liegt;
- Fig. 5: eine perspektivische Darstellung eines Kolbenkäfigs der Schwenkkolbenmaschine in Fig. 1 bis 4 einschließlich darin aufgenommener Kolben;
- Fig. 6: eine Außenansicht eines Gehäuseteils der Schwenkkolbenmaschine in Fig. 1 bis 4;
- Fig. 7: eine Innenansicht des Gehäuseteils in Fig. 6, in einem gegenüber Fig. 6 vergrößerten Maßstab; und
- Fig. 8, 9 und 10: jeweils eine weitere Innenansicht des Gehäuseteils wie in Fig. 7, wobei jedoch eine Stirnseite des Kolbenkäfigs in Fig. 5 mit unterbrochenen Linien zusätzlich dargestellt ist, und wobei Fig. 8, 9 und 10 jeweils eine unterschiedliche Umlaufstellung des Kolbenkäfigs in Bezug auf das stirnseitige Gehäuseteil zeigen.

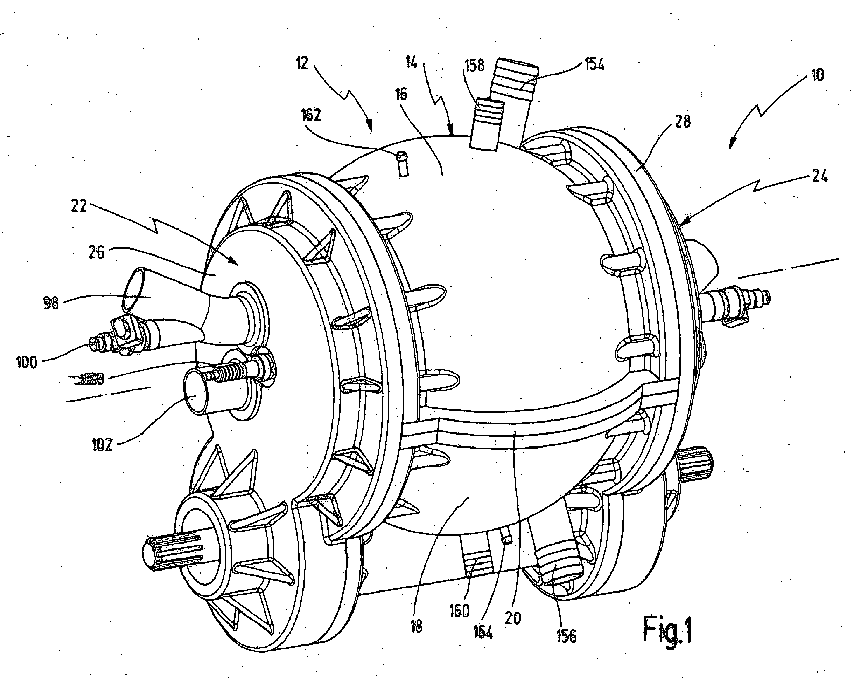

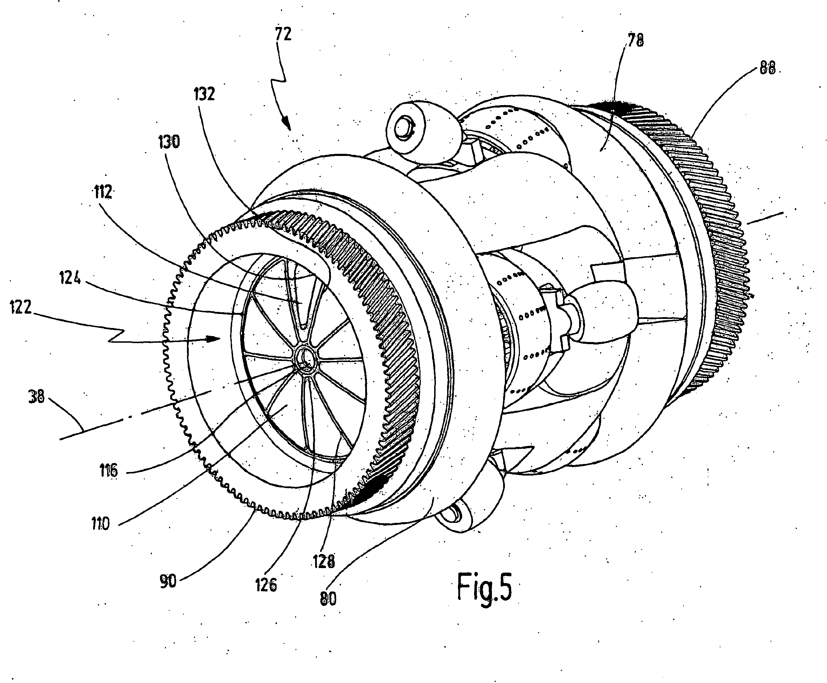

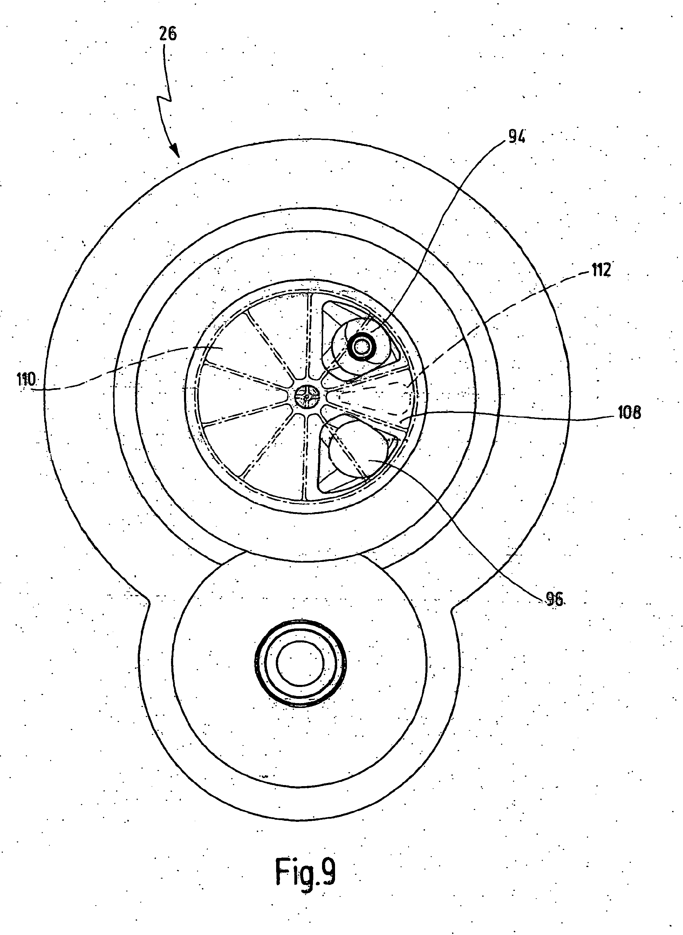

In Fig. 1 bis 4 ist eine mit dem allgemeinen Bezugszeichen 10 versehene Schwenkkolbenmaschine dargestellt. Weitere Einzelheiten der Schwenkkolbenmaschine 10 sind in den Fig. 5 bis 10 dargestellt.

Die Schwenkkolbenmaschine 10 ist allgemein als Brennkraftmaschine ausgelegt, kann jedoch bei entsprechenden Modifikationen auch als Pumpe oder als Kompressor verwendet werden.

Die Schwenkkolbenmaschine 10 weist ein Gehäuse 12 auf, das in Fig. 1 geschlossen dargestellt ist. Das Gehäuse 12 weist einen mittleren Gehäuseabschnitt 14 auf, der kugelförmig ausgebildet ist. Der mittlere Gehäuseabschnitt 14 ist aus zwei Gehäusehälften 16 und 18 zusammengesetzt, die über einen Flansch 20 miteinander verbunden sind.

Das Gehäuse 12 weist weiterhin eine erste Stirnseite 22 und eine zweite Stirnseite 24 auf, die der ersten Stirnseite 22 gegenüberliegt.

Die erste Stirnseite 22 wird durch einen stirnseitigen Gehäusedeckel 26 und die zweite Stirnseite 24 durch einen stirnseitigen Gehäusedeckel 28 gebildet. Die Gehäusedeckel 26 und 28 sind mit dem mittleren Gehäuseabschnitt 14 bzw. dessen Gehäusehälften 16 und 18 verbunden. Die Gehäusedeckel 26 und 28 sind von dem mittleren Gehäuseabschnitt 14 abnehmbar, ebenso wie die Gehäusehälfte 16 von der Gehäusehälfte 18 abnehmbar ist.

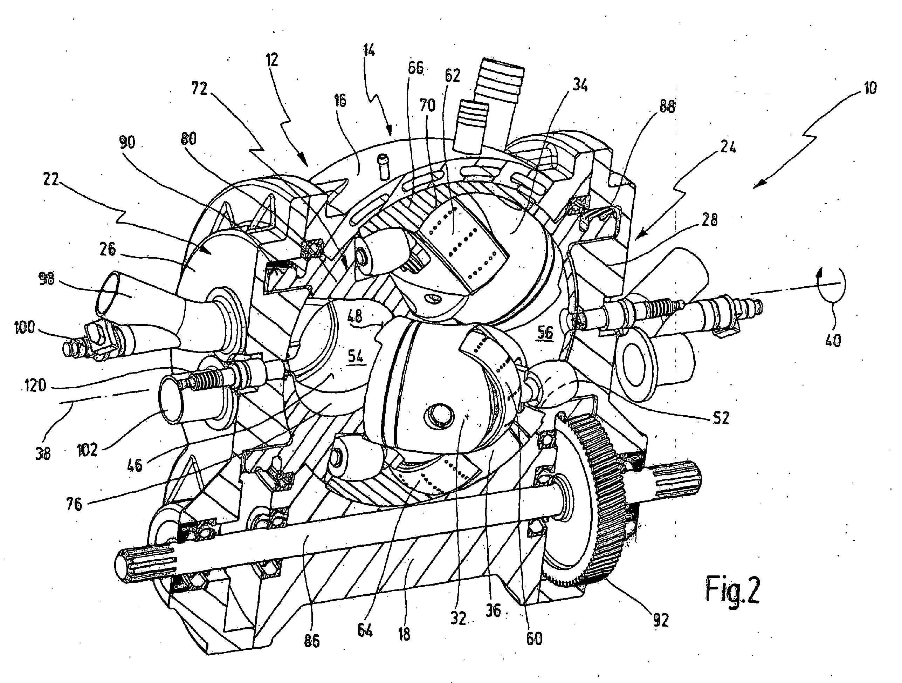

Gemäß Fig. 2 bis 4 sind im Inneren des Gehäuses 12 vier Kolben 30 bis 36 angeordnet. Die Kolben 30 bis 36 können in dem Gehäuse 12 gemeinsam um eine Drehachse 38 gemäß einem Pfeil 40 umlaufen. Die Drehachse 38 geht durch den Mittelpunkt des kugelförmigen Inneren des Gehäuses 12 hindurch und ist gehäusefest, d.h. ändert ihre Lage relativ zum Gehäuse 12 während des Umlaufens der Kolben 32 bis 36 nicht.

Die Kolben 30 bis 36 führen beim Umlaufen um die Drehachse 38 eine der Umlaufbewegung überlagerte Schwenkbewegung aus. Die Kolben 30 und 32 führen dabei hin- und hergehende Schwenkbewegungen um eine erste Schwenkachse 42 aus, die die Drehachse 38 im Mittelpunkt des Inneren des Gehäuses 12 senkrecht schneidet, während die Kolben 34 und 36 beim Umlaufen um die Drehachse 38 hin- und hergehende Schwenkbewegungen um eine zweite Schwenkachse 44 ausführen, die die Drehachse 38 ebenfalls im Mittelpunkt des Inneren des Gehäuses 12 senkrecht schneidet, aber auch zur Schwenkachse 42 senkrecht steht. Die Schwenkachsen 42 und 44 laufen mit den Kolben 30 bis 36 ebenfalls um die Drehachse 38 um. Die momentane Schwenkebene der Kolben 30 und 32 steht dabei stets senkrecht zur momentanen Schwenkebene der Kolben 34 und 36.

Es ist jedoch auch möglich, dass alle vier Kolben 30 bis 36 in einer gemeinsamen Ebene angeordnet sind und entsprechend die Schwenkachsen 42 und 44 parallel sind oder zusammenfallen.

Sowohl die Drehachse 38 als auch die Schwenkachsen 42 und 44 sind hier als geometrische Achsen zu verstehen.

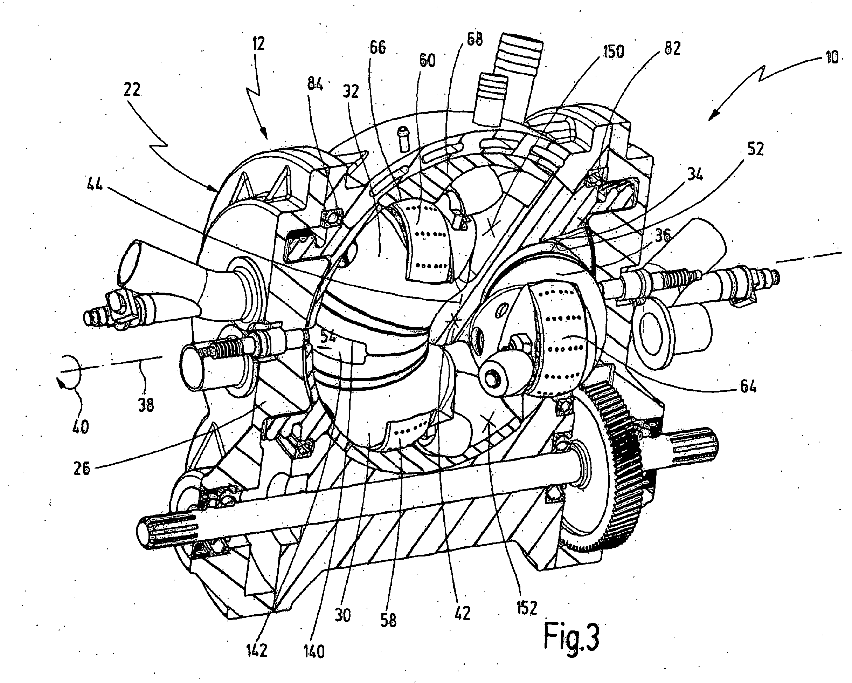

Die Schwenkbewegungen der Kolben 30 und 32 bzw. 34 und 36 erfolgen zwischen zwei Endstellungen, wobei die eine Endstellung in Fig. 2 (sog. UT-Stellung) und die andere Endstellung in Fig. 3 (sog. OT-Stellung) gezeigt ist.

Die Schwenkbewegungen der Kolben 30 und 32 einerseits und der Kolben 34 und 36 andererseits sind stets gleichsinnig, d.h. wenn die Kolben 30 und 32 auseinander schwenken, schwenken auch die Kolben 34 und 36 auseinander, und umgekehrt.

Jeder der Kolben weist eine Endfläche auf, d.h. der Kolben 30 weist eine Endfläche 46, der Kolben 32 eine Endfläche 48, der Kolben 34 eine Endfläche 50 und der Kolben 36 eine Endfläche 52 auf, wobei die Sicht auf Letztere in Fig. 2 durch ein anderes Bauteil verdeckt ist.

Die Kolben 30 und 32 bilden ein erstes Kolbenpaar, deren Endflächen 46 und 48 einander zugewandt sind. Die Endflächen 46 und 48 definieren eine erste Arbeitskammer 54. Die Kolben 34 und 36 bilden ein zweites Kolbenpaar, deren Endflächen 50 und 52 einander zugewandt sind und eine zweite Arbeitskammer 56 definieren. Entsprechend der hin- und hergehenden Schwenkbewegungen der Kolben 30 und 32 bzw. 34 und 36 vergrößern und verkleinern sich die Volumina der Arbeitskammern 54 und 56, wobei sich die Arbeitskammern 54 und 56 stets gleichsinnig vergrößern bzw. verkleinern.

Die Kolben 30 bis 36 sind in dem Gehäuse 12 so angeordnet, dass die Drehachse 38 durch beide Arbeitskammern 54 und 56 hindurchgeht, und zwar vorzugsweise in jeder Umlauf- und Schwenkstellung der Kolben 30 bis 36 mittig.

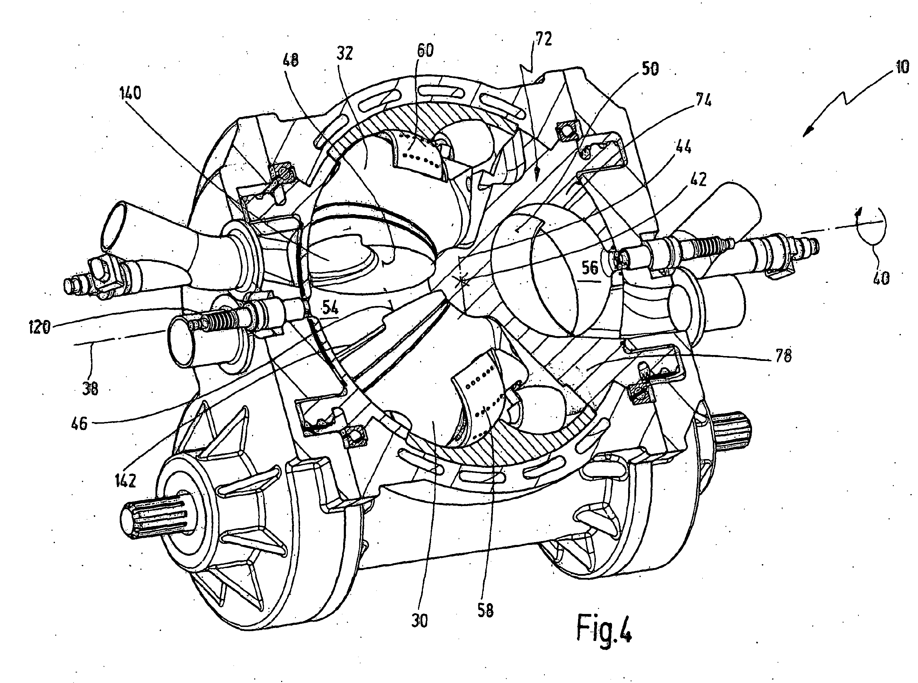

Um die Schwenkbewegungen der Kolben 30 bis 36 bei deren Umlaufbewegung um die Drehachse 38 zu erzeugen, weist jeder Kolben ein Lauforgan auf, und zwar der Kolben 30 ein Lauforgan 58 (Fig. 3 und 4), der Kolben 32 ein Lauforgan 60 (vgl. Fig. 2 bis 4), der Kolben 34 ein Lauforgan 62 (vgl. Fig. 2) und der Kolben 36 ein Lauforgan 64 (vgl. Fig. 3 und 4). Die Lauforgane 58 bis 64 sind hier als Rollen ausgebildet, wobei jedes Lauforgan 58 bis 64 an dem zugehörigen Kolben 30 bis 36 drehbar befestigt ist. Den Lauforganen 58 und 60 der Kolben 30 und 32 ist eine erste Steuerkurve 66 zugeordnet, die an einem Steuerkurvenglied 68 ausgebildet ist. Eine zweite Steuerkurve 70 an dem Steuerkurvenglied 68 ist den Lauforganen 62 und 64 der Kolben 34 und 36 zugeordnet.

Die Lauforgane 58 und 60 laufen demnach entlang derselben Steuerkurve 66, und die Lauforgane 62 und 64 entlang derselben Steuerkurve 70.

Die Steuerkurven 66 und 70 sind vollumfänglich um die Drehachse 38 herum ausgebildet und weisen eine Kontur oder Kurvenführurig auf, die es ermöglicht, die Schwenkbewegung der Kolben 30 und 32 bzw. 34 und 36 aus deren Umlaufbewegung um die Drehachse 38 herum abzuleiten.

Die Kolben 30 bis 36 sind in dem Gehäuse 12 in einem um die Drehachse 38 gemeinsam mit den Kolben 30 bis 36 umlaufenden Kolbenkäfig 72 gleitend gelagert, der in Fig. 5 zusammen mit den Kolben 30 bis 36, jedoch ohne das Gehäuse 12, dargestellt ist. In dem Kolbenkäfig 72 sind die Kolben beispielsweise mittels nicht dargestellter Nut-Feder-Verbindungen gegen Verdrehung oder Verkippung gesichert.

Der Kolbenkäfig 72 weist gemäß Fig. 4 eine den Kolben 34 und 36 zugeordnete Bohrung 74 und gemäß Fig. 2 eine den Kolben 30 und 32 zugeordnete Bohrung 76 auf. In der Bohrung 74 sind die Kolben 34 und 36 gleitend gelagert, und die Kolben 30 und 32 sind in der Bohrung 76 gleitend gelagert. Zusammen mit den Endflächen 46 und 48 der Kolben 30 und 32 begrenzt die Bohrung 76 die Arbeitskammer 54, und die Bohrung 74 begrenzt zusammen mit den Endflächen 50 und 52 der Kolben 34 und 36 die Arbeitskammer 56. Aufgrund der um 90° verschränkten Anordnung der Kolben 30 und 32 gegenüber den Kolben 34 und 36 sind auch die Bohrungen 74 und 76 senkrecht zueinander in dem Kolbenkäfig 72 ausgeführt.

Die Bohrungen 74 und 76 sind in einem jeweiligen Hauptlagerabschnitt 78 (Bohrung 74) und Hauptlagerabschnitt 80 (Bohrung 76) vorgesehen. Über die Hauptlagerabschnitte 78 und 80 ist der Kolbenkäfig 72 in dem Gehäuse 12 über Lager 82 bzw. 84 um die Drehachse 38 drehbar gelagert.

Der Kolbenkäfig 72 dient nicht nur der Lagerung der Kolben 30 bis 36, sondern auch zum Abgriff der Drehbewegung von bzw. auf eine Antriebs/Abtriebswelle 86. Dazu ist der Kolbenkäfig 72 an seinen Enden mit jeweils einer Außenverzahnung 88 bzw. 90 versehen, von denen zumindest eine, im gezeigten Ausführungsbeispiel die Außenverzahnung 88 mit einem Zahnrad 92, das mit der Abtriebswelle 86 verbunden ist, kämmt. Die Abtriebswelle 86 ist bei der Schwenkkolbenmaschine 10 demnach nicht koaxial auf der Drehachse 38 angeordnet, sondern außeraxial, wodurch die nachfolgend zu beschreibende Gaswechselsteuerung der Schwenkkolbenmaschine 10 ermöglicht wird.

Zur Funktion der Schwenkkolbenmaschine 10 als Brennkraftmaschine ist es erforderlich, dass die Arbeitskammern 54 und 56, in denen ein Brennstoff-Luft-Gemisch verdichtet und gezündet wird und nach dem Zünden expandiert, einen Gaswechsel zulassen, d.h. es muss periodisch Luft und Brennstoff in die Arbeitskammern 54 und 56 eingeleitet und verbranntes Brennstoff-Luft-Gemisch wieder aus den Arbeitskammern 54 und 56 ausgestoßen werden.

Dazu sind Gaswechselöffnungen in dem Gehäuse 12 erforderlich, die nachfolgend beschrieben werden. Bei der Schwenkkolbenmaschine 10 sind die Gaswechselöffnungen in den Stirnseiten 22 bzw. 24 des Gehäuses 12 vorgesehen, d.h. nahe der Drehachse 38, jedoch exzentrisch zu dieser, vorgesehen.

Da die Schwenkkolbenmaschine 10 zwei Arbeitskammern 54 und 56 aufweist, die jedoch symmetrisch zueinander ausgebildet sind, sind die Gaswechselöffnungen in den Stirnseiten 22 und 24 bis auf einen Versatz um 180° um die Drehachse 38 gleich zueinander ausgebildet, so dass nachfolgend nur die Gaswechselöffnungen an der Stirnseite 22 des Gehäuses 12 beschrieben werden.

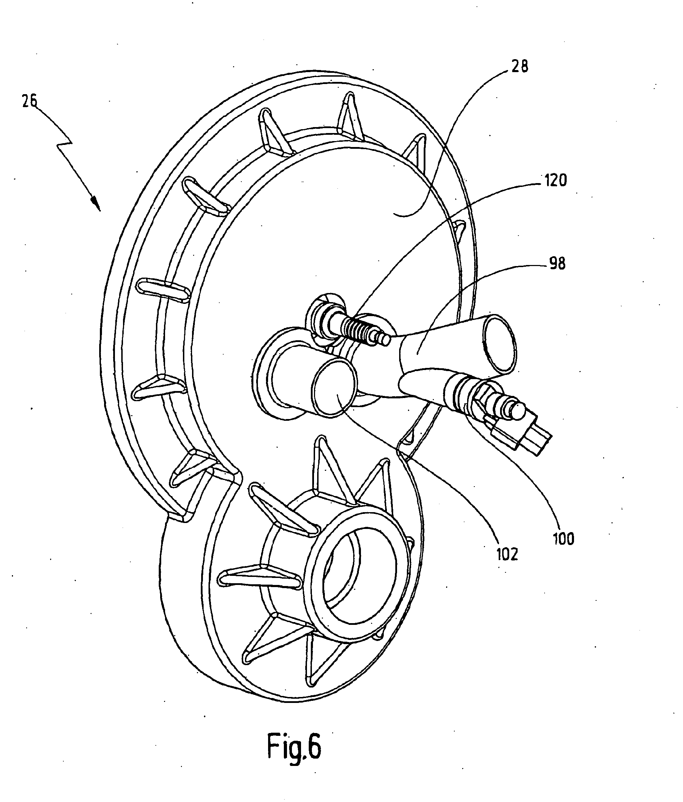

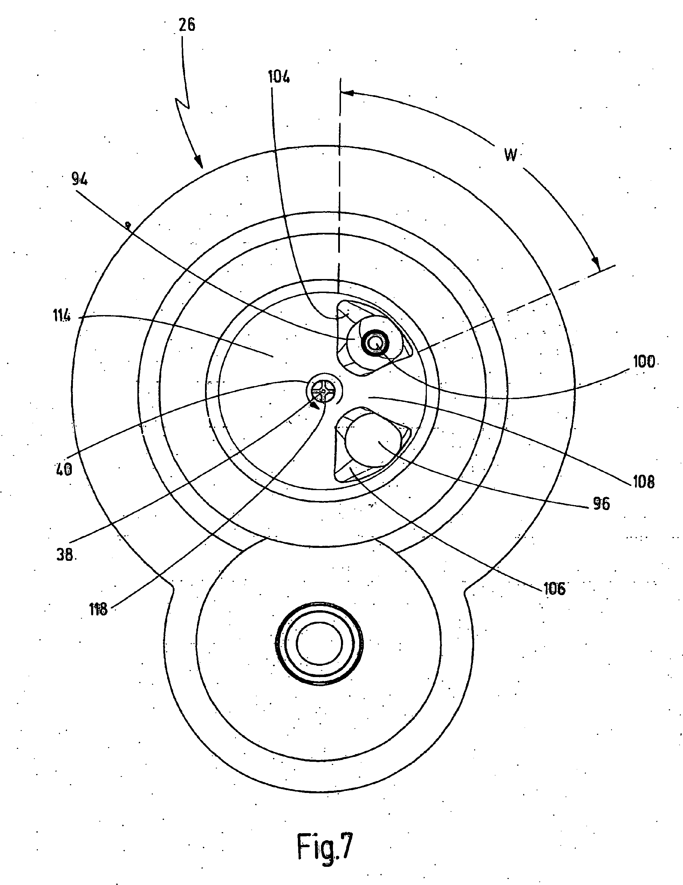

Fig. 7 zeigt eine Innenansicht des Gehäusedeckels 26, der die Stirnseite 22 des Gehäuses 12 bildet, und Fig. 6 zeigt eine Außenansicht des Gehäusedeckels 26.

In dem stirnseitigen Gehäusedeckel 26 sind gemäß Fig. 7 eine erste Gaswechselöffnung 94 und eine zweite Gaswechselöffnung 96 ausgebildet. Die Gaswechselöffnung 94 dient zum Einlassen von Gas, im vorliegenden Fall zum Einlassen von Verbrennungsluft in die Arbeitskammer 56, und die Gaswechselöffnung 96 dient zum Auslassen bzw. Ausstoßen eines Gases aus der Arbeitskammer 56, hier zum Ausstoßen von verbranntem Brennstoff-Luft-Gemisch.

Der Gaswechselöffnung 94 ist ein Stutzen 98 zugeordnet, der in dem gezeigten Ausführungsbeispiel mit einer Einspritzdüse 100 zum Einspritzen eines Brennstoffes zusammen mit der Verbrennungsluft in die Arbeitskammer 56 kombiniert ist. Es kann jedoch auch eine Direkteinspritzung für die Schwenkkolbenmaschine 10 vorgesehen sein, d.h. die Einspritzdüse 100 ist dann von dem Stutzen 98 separiert angeordnet.

Der Gaswechselöffnung 96 ist ein Stutzen 102 zugeordnet, der einer Verbindung der Schwenkkolbenmaschine 10 zu einem Auspuffsystem dient.

Die Gaswechselöffnungen 94 und 96 sind an dem stirnseitigen Gehäusedeckel 28 exzentrisch bezüglich der Drehachse 38 angeordnet. Wie aus Fig. 7 hervorgeht, sind die Gaswechselöffnungen 94 und 96 nicht als mit gleichem Öffnungsquerschnitt durch den stirnseitigen Gehäusedeckel 28 hindurchgehende Bohrungen ausgebildet, sondern erweitern sich von der Außenseite zur Innenseite des stirnseitigen Gehäusedeckels 28. Die Gaswechselöffnung 94 weist dazu eine kavernenartige oder trichterförmige Ausnehmung 104 auf, während die Gaswechselöffnung 96 eine entsprechende kavernenartige Ausnehmung 106 aufweist. Der Umriss der kavernenartigen Ausnehmungen 104 und 106 ist etwa kreissektorförmig ausgebildet.

Die kavernenartigen Vertiefungen oder Ausnehmungen 104 bzw. 106 wirken als Trichter für den jeweiligen Gaseinlass bzw. Gasauslass.

Eine maximale lichte Weite W der Gaswechselöffnungen 94 und 96, genauer gesagt der kavernenartigen Ausnehmungen 104 und 106, erstreckt sich in Umlaufrichtung um die Drehachse 38 gesehen über einen Umlaufwinkel von mehr als 30° und weniger als 90°. Für die kavernenartige Ausnehmungen 104 und 106 beträgt der Umlaufwinkel in Fig. 7 jeweils etwa 70°.

Die Gaswechselöffnungen 94 und 96 sind durch einen Steg 108 voneinander getrennt.

Der Steg 108 hat in Umlaufrichtung um die Drehachse 38 gesehen eine kleinere Winkelerstreckung als die beiden kavernenartigen Vertiefungen bzw. Ausnehmungen 104 und 106, im vorliegenden Fall von etwa 40°.

In Umlaufrichtung der Kolben 30 bis 36 bzw. des Kolbenkäfigs 72 gesehen (Pfeil 40 in Fig. 7) befindet sich die Gaswechselöffnung 96 zum Auslassen von verbranntem Brennstoff-Luft-Gemisch vor der Gaswechselöffnung 94 zum Einlassen des frischen Brennstoff-Luft-Gemisches. Dies trägt der Funktionsweise der Schwenkkolbenmaschine 10 bei der Ausführung der Arbeitstakte des Ausstoßens, Ansaugens, Verdichtens und Expandierens (Arbeitens) Rechnung, wie noch beschrieben wird.

Die Gaswechselöffnungen 94 und 96 in dem stirnseitigen Gehäusedeckel 26 der Stirnseite 22 stellen den einen Teil der Gaswechselsteuerung der Schwenkkolbenmaschine 10 dar. Der andere Teil der Gaswechselsteuerung der Schwenkkolbenmaschine 10 wird von dem Kolbenkäfig 72 übernommen. Der Kolbenkäfig 72 weist eine dem stirnseitigen Gehäusedeckel 26 der Stirnseite 22 des Gehäuses 12 unmittelbar gegenüberliegende Stirnseite 110 auf, die entsprechend der innenseitig konkaven Ausgestaltung des stirnseitigen Gehäusedeckels 26 außenseitig konvex mit gleichem Krümmungsradius gewölbt ist. In der Stirnseite 110 des Kolbenkäfigs 72 ist eine Öffnung 112 vorhanden, die durch die Stirnseite 110 hindurchgeht. In dem gezeigten Ausführungsbeispiel weist die Öffnung 112 einen Öffnungsquerschnitt auf, der im Wesentlichen die Form eines Kreissektors aufweist. Die Breite bzw. maximale Weite der Öffnung 112 in Umlaufrichtung um die Drehachse 38 gesehen ist dabei kleiner als die minimale Breite bzw. Weite des Stegs 108 in dem stirnseitigen Gehäusedeckel 26. Die Öffnung 112 ist wie die Gaswechselöffnungen 94 und 96 exzentrisch zur Drehachse 38 angeordnet.

Beim Umlaufen des Kolbenkäfigs 72 um die Drehachse 38 überstreicht die Öffnung 112 die ihr unmittelbar gegenüberliegende Fläche der Innenseite des stirnseitigen Gehäusedeckels 26, und je nach Umlaufstellung überstreicht die Öffnung 112 nacheinander die Gaswechselöffnung 96 und die Gaswechselöffnung 94 und selbstverständlich auch den übrigen geschlossenen Bereich 114 der der Stirnseite 110 gegenüberliegenden Fläche des stirnseitigen Gehäusedeckels 26 einschließlich des Stegs 108.

Mit Ausnahme der Öffnung 112 und mit Ausnahme einer zentralen Öffnung 116, die mit einer ebenfalls zentralen Öffnung 118 in dem stirnseitigen Gehäusedeckel 26 fluchtet, und in der eine Zündkerze oder Glühkerze 120 positioniert ist, ist die Stirnseite 110 des Kolbenkäfigs 72 vollflächig, d.h. geschlossen,.

Um die Gaswechselöffnungen 94 und 96 gegen die Stirnseite 110 hinreichend abzudichten, wenn gerade kein Gaswechsel stattfinden soll, d.h. wenn die Öffnung 112 weder mit der Gaswechselöffnung 94 noch mit der Gaswechselöffnung 96 kommuniziert, ist eine Dichtungsanordnung 122 vorgesehen, und zwar in dem gezeigten Ausführungsbeispiel an der Stirnseite 110 des Kolbenkäfigs 72 selbst.

Die Dichtungsanordnung 122 weist eine radial äußere Ringdichtung 124, eine radial innere Ringdichtung 126 sowie eine Mehrzahl von sich radial erstreckenden bzw. strahlenförmig angeordneten Dichtungen 128 auf, die zwischen der radial inneren Ringdichtung 126 und der radial äußeren Ringdichtung 124 angeordnet sind und diese miteinander verbinden. Die radial innere Ringdichtung 126 dichtet gegen die zentrale Öffnung 116 ab, und die radial äußere Ringdichtung 124 gegen den radial äußeren Bereich der Stirnseite 110 des Kolbenkäfigs 72. Zwei der sich radial erstreckenden Dichtungen 128, nämlich sich radial erstreckende Dichtungen 130 und 132, umgeben dabei zusammen mit dem entsprechenden Abschnitt der radial inneren Ringdichtung 126 und der radial äußeren Ringdichtung 124 die Öffnung 112 in der Stirnseite 110 des Kolbenkäfigs 72.

Alle vorstehend genannten Dichtungen 124 bis 132 der Dichtungsanordnung 122 sind einstückig miteinander ausgebildet und in entsprechenden Nuten in der Außenseite der Stirnseite 110 des Kolbenkäfigs 72 aufgenommen. Die Dichtungen 124 bis 132 sind insbesondere in den zuvor genannten Nuten federnd, beispielsweise über Druckfederorgane gelagert, so dass die Dichtungen 124 bis 132 mittels Federkraft gegen die Innenseite des stirnseitigen Gehäusedeckels 26 angedrückt werden.

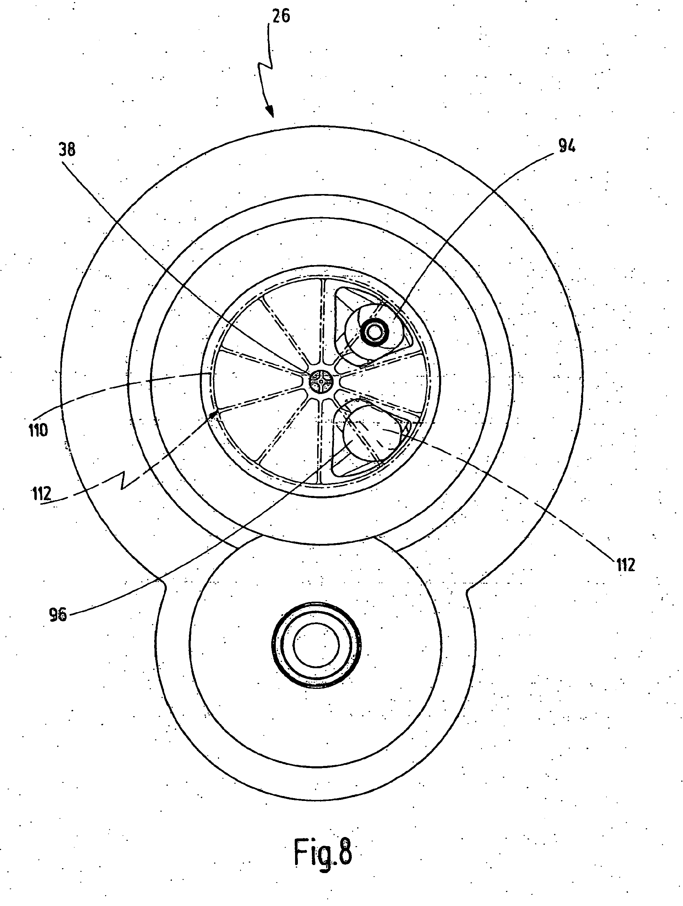

Fig. 8 bis 10 zeigen verschiedene Relativstellungen zwischen der Öffnung 112 in der Stirnseite 110 des Kolbenkäfigs 72 und den Gaswechselöffnungen 94 und 96 im stirnseitigen Gehäusedeckel 26.

Beginnend bei Fig. 8 befindet sich der Kolbenkäfig 72 in einer Umlaufstellung um die Drehachse 38, in der die Öffnung 112 mit der Gaswechselöffnung 96 kommuniziert. Während die Öffnung 112 die Gaswechselöffnung 96 überstreicht, findet ein Ausstoßen von verbranntem Brennstoff-Luft-Gemisch aus der Arbeitskammer 54 statt. Währenddessen verschwenken die Kolben 30 und 32 aus der in Fig. 2 dargestellten UT-Stellung über die in Fig. 4 dargestellte Zwischenstellung in die in Fig. 3 dargestellte OT-Stellung. Für diesen Schwenkhub benötigen die Kolben 30 und 32 einen Umlaufweg von 90° um die Drehachse 38. Während des Ausstoßvorganges ist die Gaswechselöffnung 94 gegen die Arbeitskammer 54 vollkommen abgedichtet, und zwar über die Dichtungsanordnung 122.

Nachdem der Ausstoßvorgang beendet ist, bzw. in der OT-Stellung in Fig. 3, fluchtet die Öffnung 112 in der Stirnseite 110 des Kolbenkäfigs 72 mit dem Steg 108 des stirnseitigen Gehäusedeckels 26. In diesem Zustand sind beide Gaswechselöffnungen 94 und 96 gegen die Arbeitskammer 54 abgedichtet. Nach der OT-Stellung gemäß Fig. 3 verschwenken die Kolben 30 und 32 wieder auseinander, und zwar über die Zwischenstellung gemäß Fig. 4 in die UT-Stellung gemäß Fig. 2, wobei jedoch die Kolben in der neuerlichen UT-Stellung gegenüber Fig. 2 um 180° um die Drehachse 38 weiter umgelaufen sind.

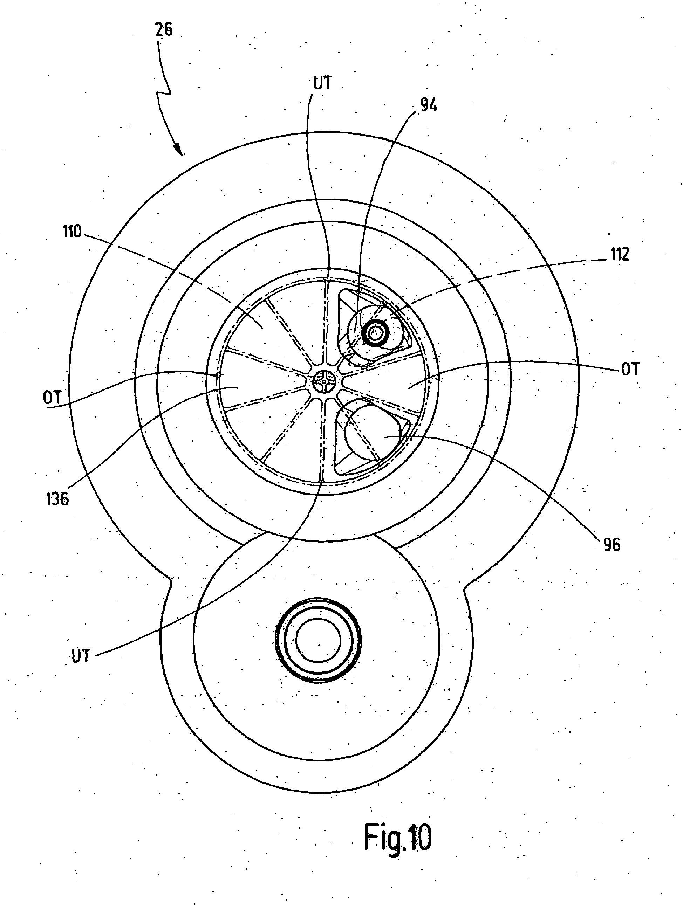

Während des zuvor beschriebenen Auseinanderschwenkens der Kolben 30 und 32 gleitet die Öffnung 112 in der Stirnseite 110 des Kolbenkäfigs 72 gemäß Fig. 10 über die Gaswechselöffnung 94, wodurch Brennstoff-Luft-Gemisch über die Gaswechselöffnung 94 in die Arbeitskammer 54 eingesaugt wird. Der Vorgang des Einlassens bzw. Ansaugens des Brennstoff-Luft-Gemisches erfolgt wiederum über weniger als 90° der Umlaufbewegung der Kolben 30 und 32 um die Drehachse 38. Wenn die Kolben 30 und 32 ihre UT-Stellung erreicht haben, fluchtet die Öffnung 112 nicht mehr mit der Gaswechselöffnung 94, und die Arbeitskammer 54 ist nun wieder vollkommen gegen die Gaswechselöffnungen 94 und 96 abgedichtet.

Aus dieser erneuten UT-Stellung verschwenken die Kolben 30 und 32, vermittelt durch die Steuerkurve 66, wieder aufeinander zu, wodurch das zuvor eingelassene bzw. angesaugte Brennstoff-Luft-Gemisch verdichtet wird, bis die Kolben 30 und 32 wieder die OT-Stellung erreicht haben. Die Öffnung 112 befindet sich dabei etwa auf Höhe einer Stelle 136 in Fig. 10. Das nunmehr maximal verdichtete Brennstoff-Luft-Gemisch wird dann über die Zündkerze 120 gezündet, und die sich daraufhin einstellende Expansion des Brennstoff-Luft-Gemisches erfolgt dann während des erneuten Übergangs der Kolben 30 und 32 von ihrer OT-Stellung in ihre UT-Stellung über einen weiteren 90°-Umlaufweg um die Drehachse 38.

Während der Arbeitstakte des Verdichtens und des Expandierens (Arbeitens), die insgesamt über einen Umlaufweg von 180° um die Drehachse 38 erfolgen, sind die Gaswechselöffnungen 94 und 96 durch die Stirnseite 110 des Kolbenkäfigs 72 und die Dichtungsanordnung 122 dicht geschlossen. Die Öffnung der Gaswechselöffnungen 96 und 94 erfolgt automatisch durch Vorbeilaufen der Öffnung 112 des Kolbenkäfigs 72 an den Gaswechselöffnungen 96 und 94.

In Fig. 10 sind die entsprechenden Kolbenstellungen mit "OT" und "UT" veranschaulicht.

Während die Gaswechselsteuerung zuvor mit Bezug auf die Arbeitskammer 54 beschrieben wurde, ist anzumerken, dass die Gaswechselsteuerung für die Arbeitskammer 56 vollkommen analog verläuft, ohne dass dies hier einer näheren Beschreibung bedarf. Es besteht lediglich ein zeitlicher Versatz zwischen den Arbeitstakten. Während in der Arbeitskammer 54 gerade der Arbeitstakt des Ansaugens von frischem Brennstoff-Luft-Gemisch erfolgt, findet in der Arbeitskammer 56 der Arbeitstakt des Expandierens (Arbeitens) statt. Wenn in der Arbeitskammer 54 der Arbeitstakt des Ausstoßens stattfindet, findet in der Arbeitskammer 56 der Arbeitstakt des Verdichtens statt, usw.

Die Endflächen der Kolben 30 bis 36 weisen in ihrem jeweiligen Bereich, der der Stirnseite des Kolbenkäfigs 72 zugewandt ist, eine muldenartige Vertiefung auf, wie für die Kolben 30 und 32 mit dem Bezugszeichen 140 und 142 dargestellt ist. Die muldenartigen Vertiefungen 140 und 142, die entsprechend auch an den Kolben 34 und 36 vorgesehen sind, bewirken, dass in der OT-Stellung der Kolben 30 und 32 noch ein endliches Volumen der Arbeitskammer 54 verbleibt, wodurch bei einer Zündung des in der Arbeitskammer 54 gerade verdichteten Brennstoff-Luft-Gemisches die Kolben 30 und 32 mit einer optimalen Hebelwirkung auseinandergedrückt werden. Gemäß Fig. 3 sind den Kolben 30 und 32 der Arbeitskammer 54 abgewandt jeweils rückwärtige Kammern 150 und 152 zugeordnet, die sich im Volumen verkleinern, wenn sich die Arbeitskammer 54 vergrößert, und umgekehrt. Die Kammern 150 und 152 können als Vordruckkammern zum Vorkomprimieren von Verbrennungsluft beim Auseinanderschwenken der Kolben 30 und 32 verwendet werden, wobei dann in der UT-Stellung der Kolben 30 und 32 die vorkomprimierte Verbrennungsluft über eine Ventilanordnung (nicht dargestellt) in den Kolben 30 und 32 durch diese hindurch in die Arbeitskammer 54 injiziert werden kann. Vergleichbare rückwärtige Kammern bzw. Vordruckkammern können entsprechend für die Kolben 34 und 36 vorgesehen sein.

Gemäß Fig. 1 ist an dem Gehäuse 12 ferner ein Lufteintritt 154 und ein entsprechender Luftaustritt 156 vorhanden, wobei über den Lufteintritt 154 Kühlluft für den Innenraum des Gehäuses 12 zugeführt und über den Luftaustritt 156 wieder ausgelassen werden kann. Des Weiteren ist ein Wassereintritt 158 vorgesehen, über den Kühlwasser für die Kühlung des Gehäuses 12 selbst eingelassen werden kann, wobei das Wasser dann über einen Wasseraustritt 160 wieder abgeführt wird.

Ein Öleintritt 162 für die Schmierung und Kühlung der rotierenden Teile der Schwenkkolbenmaschine 10, insbesondere des Kolbenkäfigs 72 und der Kolben 30 bis 36 sowie ein Ölauslass 164 sind ebenfalls am Gehäuse 12 vorgesehen.

## Patentansprüche

1. Schwenkkolbenmaschine, mit einem Gehäuse (12), in dem ein erster und zumindest ein zweiter Kolben (30, 32) angeordnet sind, die gemeinsam in dem Gehäuse (12) um eine gehäusefeste Drehachse (38) umlaufen können, und die beim Umlaufen um die Drehachse (38) um eine senkrecht zur Drehachse (38) durch die Gehäusemitte verlaufende Schwenkachse (42) zueinander gegensinnige hin- und hergehende Schwenkbewegungen ausführen, wobei zwischen einander zugewandten Endflächen (46, 48) des ersten und zumindest zweiten Kolbens (30, 32) eine Arbeitskammer (54) angeordnet ist, und mit zumindest einer Gaswechselöffnung (94, 96) im Gehäuse (12) zum Ein- oder Auslassen eines Gases in die oder aus der Arbeitskammer (54), und wobei die Drehachse (38) durch die Arbeitskammer (54) verläuft, **dadurch gekennzeichnet, dass** der erste Kolben (30) und der zumindest zweite Kolben (32) in einem Kolbenkäfig (72) gleitend gelagert sind, der im Gehäuse (12) konzentrisch zur Drehachse (38) um diese drehbar angeordnet ist und mit den Kolben (30, 32) gemeinsam um die Drehachse (38) umläuft, dass die zumindest eine Gaswechselöffnung (94, 96), bezogen auf die Drehachse (38), an einer Stirnseite (22) des Gehäuses (12) exzentrisch angeordnet ist, und dass der Stirnseite (22) des Gehäuses (12) eine vollflächige Stirnseite (110) des Kolbenkäfigs (72) gegenüberliegt, die eine in Umlaufrichtung um die Drehachse (38) begrenzte exzentrische Öffnung (112) aufweist, wobei die Strömung des Arbeitsgases durch die zumindest eine Gaswechselöffnung (94, 96) im Wesentlichen axial zur Drehachse gerichtet ist.

2. Schwenkkolbenmaschine nach Anspruch 1, **dadurch gekennzeichnet, dass** sich die zumindest eine Gaswechselöffnung (94, 96) von einer Außenseite hin zu einer Innenseite der Stirnseite (22) des Gehäuses (12) im Öffnungsquerschnitt erweitert.

3. Schwenkkolbenmaschine nach Anspruch 1 oder 2, **dadurch gekennzeichnet, dass** sich eine maximale lichte Weite der zumindest einen Gaswechselöffnung (94, 96) in Umlaufrichtung um die Drehachse (38) gesehen über einen Umlaufwinkel von mehr als 30° und weniger als 90° erstreckt.

4. Schwenkkolbenmaschine nach einem der Ansprüche 1 bis 3, **dadurch gekennzeichnet, dass** an der Stirnseite (22) des Gehäuses (12) eine zweite Gaswechselöffnung (94) exzentrisch angeordnet ist, wobei die zumindest eine Gaswechselöffnung (96) zum Auslassen eines Gases aus der Arbeitskammer (54) und die zweite Gaswechselöffnung (94) zum Einlassen eines Gases in die Arbeitskammer (54) dient, und wobei die Öffnung (112) in der Stirnseite (110) des Kolbenkäfigs (72) beim Umlaufen um die Drehachse nacheinander, jedoch ohne zeitlichen Überlapp, mit der zumindest einen und der zweiten Gaswechselöffnung (96, 94) kommuniziert.

5. Schwenkkolbenmaschine nach Anspruch 4, **dadurch gekennzeichnet, dass** die zumindest eine Gaswechselöffnung (96) zum Auslassen von Gas in Umlaufrichtung des Kolbenkäfigs (72) gesehen vor der zweiten Gaswechselöffnung (94) zum Einlassen von Gas angeordnet ist.

6. Schwenkkolbenmaschine nach Anspruch 4 oder 5, **dadurch gekennzeichnet, dass** die zumindest eine Gaswechselöffnung (96) und die zweite Gaswechselöffnung (94) in Umlaufrichtung des Kolbenkäfigs (72) gesehen durch einen Steg (108) voneinander getrennt sind, der zumindest geringfügig breiter ist als die Breite der Öffnung (112) des Kolbenkäfigs (72), wobei sich der Steg (108) in Umlaufrichtung gesehen über einen Winkel von etwa 20° bis etwa 60° erstreckt.

7. Schwenkkolbenmaschine nach Anspruch 6, **dadurch gekennzeichnet, dass** sich der Steg (108) über einen Winkel von etwa 30° bis etwa 50° erstreckt.

8. Schwenkkolbenmaschine nach einem der Ansprüche 1 bis 7, **dadurch gekennzeichnet, dass** zwischen der Stirnseite (22) des Gehäuses (12) und der Stirnseite (110) des Kolbenkäfigs (72) eine Dichtungsanordnung (122) vorhanden ist, die zumindest eine Dichtung aufweist, die die zumindest eine Gaswechselöffnung (94, 96) gegen die Stirnseite (110) des Kolbenkäfigs (72) abdichtet.

9. Schwenkkolbenmaschine nach Anspruch 8, **dadurch gekennzeichnet, dass** die Dichtungsanordnung (122) am Kolbenkäfig (72) vorgesehen ist und eine bezogen auf die Drehachse (38) radial äußere Ringdichtung (124), ggf. eine radial innere Ringdichtung (126) und zumindest zwei in Umfangsrichtung voneinander beabstandete sich zumindest näherungsweise radial erstreckende Dichtungen (130, 132) aufweist, die mit den Ringdichtungen (124, 126) verbunden und beidseits der Öffnung (112) des Kolbenkäfigs (72) angeordnet sind.

10. Schwenkkolbenmaschine nach Anspruch 9, **dadurch gekennzeichnet, dass** die Dichtungsanordnung (122) mehr als zwei sich zumindest näherungsweise radial erstreckende Dichtungen (128, 130, 132) aufweist, die vorzugsweise in Umlaufrichtung um die Drehachse (38) gleichmäßig verteilt sind.

11. Schwenkkolbenmaschine nach einem der Ansprüche 1 bis 10, **dadurch gekennzeichnet, dass** in der Stirnseite (22) des Gehäuses (12) eine weitere, zentrische Öffnung (118) und in der Stirnseite (110) des Kolbenkäfigs (72) ebenfalls eine weitere, zentrische Öffnung (116) vorhanden ist.

12. Schwenkkolbenmaschine nach einem der Ansprüche 1 bis 11, **dadurch gekennzeichnet, dass** die Endflächen (46, 48) der Kolben (30, 32) in einem Bereich, der der Stirnseite (110) des Kolbenkäfigs (72) zugewandt ist, eine Vertiefung (140, 142) aufweisen.

## Claims

1. An oscillating piston engine, comprising a housing (12) in which a first and at least a second piston (30, 32) are arranged which can jointly revolve in the housing (12) about an axis of rotation (38) which is fixed in relation to the housing, and which perform when revolving about the axis of rotation (38) reciprocating pivoting movements in opposite directions relative to one another about a pivot axis (42) running through the center of the housing perpendicularly to the axis of rotation (38), a working chamber (54) being arranged between mutually facing end surfaces (46, 48) of the first and at least second piston (30, 32), and further comprising at least one gas exchange opening (94, 96) in the housing (12) for admitting or discharging a gas into or from the working chamber (54), and wherein the axis of rotation (38) runs through the working chamber (54), **characterized in that** the first piston (30) and the at least second piston (32) are mounted to slide in a piston cage (72) which is arranged in the housing (12) concentrically with the axis of rotation (38) so as to rotate about said axis of rotation and revolves together with the pistons (30, 32) about the axis of rotation (38), **in that** the at least one gas exchange opening (94, 96) is arranged eccentrically, with respect to the axis of rotation (38), on an end face (22) of the housing (12), and **in that** a full-area end face (110) of the piston cage (72) opposes the end face (22) of the housing (12) which has an eccentric opening (112) delimited in the direction of revolution about the axis of rotation (38), wherein the flow of the working gas through the at least one gas exchange opening (94, 96) is substantially axially directed with respect to the axis of rotation.

2. The oscillating piston engine of claim 1, **characterized in that** the at least one gas exchange opening (94, 96) widens in opening cross section from an outside toward an inside of the end face (22) of the housing (12).

3. The oscillating piston engine of claim 1 or 2, **characterized in that** a maximum clear width of the at least one gas exchange opening (94, 96) extends, viewed in the direction of revolution about the axis of rotation (38), over an angle of revolution of more than 30° and less than 90°.

4. The oscillating piston engine of any one of claims 1 through 3, **characterized in that** a second gas exchange opening (94) is arranged eccentrically on the end face (22) of the housing (12), the at least one gas exchange opening (96) serving to discharge a gas from the working chamber (54) and the second gas exchange opening (94) to admit a gas into the working chamber (54), and the opening (112) in the end face (110) of the piston cage (72) communicating when revolving about the axis of rotation successively, but without a time overlap, with the at least one and the second gas exchange opening (96, 94).

5. The oscillating piston engine of claim 4, **characterized in that** the at least one gas exchange opening (96) for discharging gas is arranged, viewed in the direction of revolution of the piston cage (72), before the second gas exchange opening (94) for admitting gas.

6. The oscillating piston engine of claim 4 or 5, **characterized in that** the at least one gas exchange opening (96) and the second gas exchange opening (94) are separated from each other, viewed in the direction of revolution of the piston cage (72), by a web (108) which is at least slightly broader than the breadth of the opening (112) of the piston cage (72), the web (108) extending, viewed in the direction of revolution, over an angle of from approximately 20° to approximately 60°.

7. The oscillating piston engine of claim 6, **characterized in that** the web (108) extends over an angle of from approximately 30° to approximately 50°.

8. The oscillating piston engine of any one of claims 1 through 7, **characterized in that** between the end face (22) of the housing (12) and the end face (110) of the piston cage (72) is a sealing arrangement (122) having at least one seal which seals the at least one gas exchange opening (94, 96) from the end face (110) of the piston cage (72).

9. The oscillating piston engine of claim 8, **characterized in that** the sealing arrangement (122) is provided on the piston cage (72) and has a radially outer ring seal (124) based on the axis of rotation (38), optionally a radially inner ring seal (126) and at least two at least approximately radially extending seals (130, 132) which are set apart from one another in the circumferential direction, are connected to the ring seals (124, 126) and arranged on both sides of the opening (112) of the piston cage (72).

10. The oscillating piston engine of claim 9, **characterized in that** the sealing arrangement (122) has more than two at least approximately radially extending seals (128, 130, 132) which are preferably distributed uniformly about the axis of rotation (38) in the direction of revolution.

11. The oscillating piston engine of any one of claims 1 through 10, **characterized in that** there is present in the end face (22) of the housing (12) a further, centric opening (118) and in the end face (110) of the piston cage (72) also a further, centric opening (116).

12. The oscillating piston engine of any one of claims 1 through 11, **characterized in that** the end surfaces (46, 48) of the pistons (30, 32) have a depression (140, 142) in a region facing the end face (110) of the piston cage (72).

## Revendications

1. Moteur à pistons oscillants, comprenant un carter (12), dans lequel sont disposés un premier piston et au moins un deuxième piston (30, 32), lesquels peuvent tourner conjointement dans le carter (12) autour d'un axe de rotation (38) solidaire du carter et qui exécutent des mouvements oscillants alternatifs en sens contraire les uns par rapport aux autres autour d'un axe de pivotement (42) s'étendant de manière perpendiculaire par rapport à l'axe de rotation (38) en passant par le centre du carter, lorsqu'ils tournent autour de l'axe de rotation (38), sachant qu'une chambre de travail (54) est disposée entre des surfaces d'extrémité (46, 48) tournées les unes vers les autres du premier piston et d'au moins le deuxième piston (30, 32), et comprenant également au moins un orifice de changement de gaz (94, 96) dans le carter (12) servant à faire entrer un gaz dans la chambre de travail (54) ou à l'évacuer hors cette dernière et sachant que l'axe de rotation (38) s'étend à travers la chambre de travail (54), **caractérisé en ce que** le premier piston (30) et le deuxième piston (32) au moins au nombre de un sont logés de manière glissante dans une cage de piston (72), qui est disposée dans le carter (12) de manière concentrique par rapport à l'axe de rotation (38), de manière à pouvoir tourner autour de ce dernier et qui tourne conjointement avec les pistons (30, 32) autour de l'axe de rotation (38), **en ce que** l'orifice de changement de gaz (94, 96) au moins au nombre de un, par rapport à l'axe de rotation (38), est disposé au niveau d'un côté frontal (22) du carter (12) de manière excentrique, et **en ce qu'**un côté frontal (110) de surface pleine de la cage de piston (72) fait face au côté frontal (22) du carter (12), ledit côté frontal de surface pleine présentant un orifice (112) excentrique délimité dans la direction de rotation autour de l'axe de rotation (38), sachant que l'écoulement du gaz de travail à travers l'orifice de changement de gaz (94, 96) au moins au nombre de un est orienté essentiellement de manière axiale par rapport à l'axe de rotation.

2. Moteur à pistons oscillants selon la revendication 1, **caractérisé en ce que** l'orifice de changement de gaz (94 96) au moins au nombre de un s'élargit dans la section transversale de l'orifice en partant du côté extérieur en direction du côté intérieur du côté frontal (22) du carter (12).

3. Moteur à pistons oscillants selon la revendication 1 ou 2, **caractérisé en ce qu'**une faible largeur maximale de l'orifice de changement de gaz (94, 96) au moins au nombre de un s'étend, vu dans la direction de rotation autour de l'axe de rotation (38), sur un angle supérieur à 30° et inférieur à 90°.

4. Moteur à pistons oscillants selon l'une quelconque des revendications 1 à 3, **caractérisé en ce qu'**un deuxième orifice de changement de gaz (94) est disposé de manière excentrique au niveau du côté frontal (22) du carter (12), sachant que l'orifice de changement de gaz (96) au moins au nombre de un sert à évacuer un gaz hors de la chambre de travail (54) et que le deuxième orifice de changement de gaz (94) sert à faire entrer un gaz dans la chambre de travail (54) et sachant que l'orifice (112) du côté frontal (110) de la cage de piston (72) communique avec l'orifice de changement de gaz au moins au nombre de un et le deuxième orifice de changement de gaz (96, 94) lors de la rotation autour de l'axe de rotation les uns après les autres, toutefois sans chevauchement dans le temps.

5. Moteur à pistons oscillants selon la revendication 4, **caractérisé en ce que** l'orifice de changement de gaz (96) au moins au nombre de un servant à évacuer du gaz, vu dans la direction de rotation de la cage de piston (72), est disposé avant le deuxième orifice de changement de gaz (94) servant à faire entrer le gaz.

6. Moteur à pistons oscillants selon la revendication 4 ou 5, **caractérisé en ce que** l'orifice de changement de gaz (96) au moins au nombre de un et le deuxième orifice de changement de gaz (94) sont séparés l'un de l'autre par une entretoise (108) vus dans la direction de rotation de la cage de piston (72), laquelle est au moins légèrement plus large que la largeur de l'orifice (112) de la cage de piston (72), sachant que l'entretoise (108), vue dans la direction de rotation, s'étend sur un angle compris entre environ 20° et environ 60°.

7. Moteur à pistons oscillants selon la revendication 6, **caractérisé en ce que** l'entretoise (108) s'étend sur un angle compris entre environ 30° et environ 50°.

8. Moteur à pistons oscillants selon l'une quelconque des revendications 1 à 7, **caractérisé en ce qu'**est présent entre le côté frontal (22) du carter (12) et le côté frontal (110) de la cage de piston (72) un ensemble de joints d'étanchéité (122), qui présente au moins un joint d'étanchéité, qui étanchéifie l'orifice de changement de gaz (94, 96) au moins au nombre de un par rapport au côté frontal (110) de la cage de piston (72).

9. Moteur à pistons oscillants selon la revendication 8, **caractérisé en ce que** l'ensemble de joints d'étanchéité (122) est prévu au niveau de la cage de piston (72) et présente un joint d'étanchéité annulaire (124) extérieur radialement par rapport à l'axe de rotation (38), éventuellement un joint d'étanchéité annulaire (126) intérieur radialement et au moins deux joints d'étanchéité (130, 132) espacés l'un de l'autre dans la direction périphérique et s'étendant radialement au moins de manière approchante, lesquels sont reliés aux joints d'étanchéité annulaires (124, 126) et sont disposés de part et d'autre de l'orifice (112) de la cage de piston (72).

10. Moteur à pistons oscillants selon la revendication 9, **caractérisé en ce que** l'ensemble de joints d'étanchéité (122) présente plus de deux joints d'étanchéité (128, 130, 132) s'étendant au moins de manière approchante radialement, lesquels sont répartis de manière homogène de préférence dans la direction de rotation autour de l'axe de rotation (38).

11. Moteur à pistons oscillants selon l'une quelconque des revendications 1 à 10, **caractérisé en ce qu'**un autre orifice central (118) est présent dans le côté frontal (22) du carter (12) et qu'également un autre orifice central (116) est présent dans le côté frontal (110) de la cage de piston (72).

12. Moteur à pistons oscillants selon l'une quelconque des revendications 1 à 11, **caractérisé en ce que** les surfaces d'extrémité (46, 48) des pistons (30, 32) présentent un creux (140, 142) dans une zone, qui est tournée vers le côté frontal (110) de la cage de piston (72).
